# EUROPÄISCHE PATENTSCHRIFT

(11) **EP 1 593 235 B1**
(45) Veröffentlichungstag und Bekanntmachung des Hinweises auf die Patenterteilung: **09.05.2007**
(21) Anmeldenummer: 04705411.9
(22) Anmeldetag: 27.01.2004
(51) Int. Cl.: H04L 12/417, H04L 12/64

(54) **DETERMINISTISCHES KOMMUNIKATIONSSYSTEM**
DETERMINISTIC COMMUNICATIONS SYSTEM
SYSTEME DE COMMUNICATION DETERMINISTE

(30) Priorität: 12.02.2003 DE 10305828
(43) Veröffentlichungstag der Anmeldung: 09.11.2005
(73) Patentinhaber: SIEMENS AKTIENGESELLSCHAFT, 80333 München (DE)
(72) Erfinder: TALANIS, Thomas, 91336 Heroldsbach (DE)
(86) Internationale Anmeldenummer: PCT/EP2004/000685
(87) Internationale Veröffentlichungsnummer: WO 2004/073261

(56) Entgegenhaltungen:
- WO-A-20/04030275
- DE-A- 10 058 524

## Beschreibung

Die Erfindung betrifft ein deterministisches Kommunikationssystem, insbesondere für den Einsatz in der Automatisierungstechnik, sowie eine Datenquelle und ein Projektierungssystem für ein echtzeitfähiges, deterministisches Kommunikationssystem.

Zur Realisierung von deterministischer Echtzeitkommunikation in einem Automatisierungssystem ist es aus dem Stand der Technik bekannt, eine besondere Hardwareunterstützung der Kommunikationsteilnehmer vorzusehen. Beispielsweise aus der DE 100 585 24 ist ein solches so genanntes isochrones Real-Time-Fast-Ethernet (IRTE) bekannt.

Bei der Echtzeitkommunikation mit einem IRTE gibt es im Isochronzyklus einen IRT-Zeitbereich (IRT-Z.) und einen NRT-Zeitbereich (NRT-Z., Non Real-Time). Im IRT-Zeitbereich findet der zyklische Austausch von Echtzeitdaten statt, während im NRT-Zeitbereich über Standard-Ethernet-Kommunikation kommuniziert wird. Der NRT-Zeitbereich ist besonders geeignet zur Übertragung von Daten von niederperformanten Algorithmen.

Entsprechende Datennetze werden aus vernetzten Datennetzknoten gebildet und ermöglichen die Kommunikation zwischen mehreren Teilnehmern. Kommunikation bedeutet dabei die Übertragung von Daten zwischen den Teilnehmern. Die zu übertragenden Daten werden dabei als Datentelegramme verschickt, das heißt, die Daten werden zu einem oder mehreren Paketen zusammengepackt und in dieser Form über das Datennetz an den entsprechenden Empfänger gesendet. Man spricht deshalb auch von Datenpaketen. Der Begriff Übertragung von Daten wird dabei im Weiteren synonym zur oben erwähnten Übertragung von Datentelegrammen oder Datenpaketen verwendet.

Zur Vernetzung werden bei solchen schaltbaren Hochleistungsdatennetzen, insbesondere Ethernet, die Teilnehmer untereinander über Koppelknoten verbunden. Jeder Koppelknoten kann mit mehr als zwei Teilnehmern verbunden sein und auch selbst Teilnehmer sein. Teilnehmer sind beispielsweise Computer, speicherprogrammierbare Steuerungen (SPS) oder andere Maschinen, die elektronische Daten mit anderen Maschinen austauschen, insbesondere verarbeiten.

In verteilten Automatisierungssystemen, beispielsweise im Bereich Antriebstechnik, müssen bestimmte Daten zu bestimmten Zeiten bei bestimmten Teilnehmern eintreffen und von den Empfängern verarbeitet werden. Man spricht dabei von echtzeitkritischen Daten bzw. echtzeitkritischem Datenverkehr, da ein nicht rechtzeitiges Eintreffen der Daten am Bestimmungsort zu unerwünschten Resultaten beim Teilnehmer führt.

Ebenso ist aus dem Stand der Technik die Verwendung eines synchronen, getakteten Kommunikationssystems mit Äquidistanz-Eigenschaften (isochrones Kommunikationssystem) in einem Automatisierungssystem bekannt. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind.

Dabei erfolgt der Datenaustausch zyklisch in äquidistanten Kommunikationszyklen (Isochronzyklen), die durch den vom System verwendeten Kommunikationstakt vorgegeben werden. Teilnehmer sind beispielsweise zentrale Automatisierungsgeräte, z. B. speicherprogrammierbare Steuerungen (-SPS, Bewegungssteuerungen-) oder andere Kontrolleinheiten, Computer, oder Maschinen, die elektronische Daten mit anderen Maschinen austauschen, insbesondere Daten von anderen Maschinen verarbeiten, und Peripheriegeräte wie z. B. Ein-/ Ausgabe-Baugruppen, Antriebe, Aktoren, Sensoren. Unter Kontrolleinheiten werden im Folgenden Regler- oder Steuerungseinheiten jeglicher Art verstanden. Zur Datenübertragung werden beispielsweise Kommunikationssysteme wie z. B. Feldbus, Profibus, Ethernet, Industrial Ethernet, FireWire oder auch PCinterne Bussysteme (PCI), etc. verwendet.

Bei der Echtzeitkommunikation handelt es sich um eine geplante Kommunikation. Datentelegramme werden dabei von einem Teilnehmer zu einem fest vorgegebenen Sendezeitpunkt über vorgegebene Ports weitergeleitet. Ein Empfangsknoten erwartet ebenfalls Echtzeitdatenpakete zu einem bestimmten Zeitpunkt an einem bestimmten Port. Durch die Planung der isochronen Echtzeitkommunikation ist deshalb der Pfad, den das Echtzeittelegramm im Netzwerk nimmt, genau festgelegt. Während eines Kommunikationszyklus wird das komplette Peripherieabbild in einem Knoten ausgetauscht. Das Peripherieabbild umfasst alle echtzeitkritischen Daten, welche von einem Teilnehmer versandt, empfangen und in einem bestimmten Adressbereich eines Speichers abgelegt werden. Der gesamte Adressbereich wird während eines Zyklus überschrieben.

Ein Nachteil solcher vorbekannter echtzeitfähiger Kommunikationssysteme ist, dass dedizierte Hardwareunterstützung der Teilnehmer des Kommunikationssystems zur Realisierung der Echtzeitfähigkeit, d. h. für einen geplanten und deterministischen Verlauf der Kommunikation, erforderlich ist.

Darüber hinaus gibt es verschiedene Ansätze, um ein so genanntes Switched Ethernet echtzeitfähig zu machen:

Aus S. Rüping, E. Vonnhame, J. Jasperneite, "Analysis of Switched Ethernet Networks with Different Topologies Used in Automation Systems", in *Proc. of Fieldbus Conference (FeT '99),* Magdeburg, Germany, S. 351-358, Springer-Verlag, Sept. 99, ist es bekannt durch Mikro-Segmentierung und reduzierte Zugriffszeiten ein quasi deterministisches Kommunikationssystem zu schaffen, welches mehr oder weniger für die Echtzeitübertragung geeignet ist. Nachteilig ist hierbei insbesondere die große Anzahl von Koppelknoten, die für die Mikrosegmentierung erforderlich sind.

Aus "Design Issues for Ethernet in Automation", *Venkatramani, C. ; Tzi-cker Chiueh;* Network Protocols, 1997, Proceedings 1997 International Conference on, 28-31 Oct 1997 Seiten 152-161, sind ferner prioritätsbasierte Ansätze und Ansätze zur Glättung des Kommunikationsaufkommens für die Verbesserung der Echtzeitfähigkeit von Switched Ethernet bekannt. Insbesondere durch die Glättung des Kommunikationsaufkommens soll die Anzahl der Versuche oder Neuübertragungen zur erfolgreichen Übertragung eines Rahmens reduziert werden. Die Glättung des Kommunikationsaufkommens soll dabei durch einen leaky bucket-based algorithm erreicht werden, wie er aus R. L. Cruz, "A Calculus for network delay, Part I: Network Elements in Isolation", *IEEE Trans. on Information Theory,* 37 (1) : 114-131, Jan. 1991, bekannt ist.

Ferner ist aus dem Stand der Technik das ETHERNET Powerlink^{™} bekannt (http://www.ethernet-powerlink.com/forum/index.php?language=US und http://www.br-automation.com/press/archiv/2002 12/AT/B&R 2002 12 AT.pdf). Hierbei handelt es sich um einen Hub-basierten Ansatz mit dem Nachteil, dass hierdurch eine Begrenzung der Datenübertragungsraten bedingt ist. Ferner sind auch keine Full-Duplex point-to-point Verbindungen möglich.

Aus "Probabilistic Approach to Switched Ethernet for Real-Time Control Applications", *Baek-Young Choi; Sejun Song; Birch, N.; Jim Huang;* Real-Time Computing Systems and Applications, 2000. Proceedings. Seventh International Conference on, 2000 Seiten 384-388, ist ein auf statistischen Wahrscheinlichkeiten basierendes Zugriffsverfahren auf Switched Ethernet bekannt, mit dem die Echtzeitfähigkeit des Ethernet verbessert werden soll.

Aus "Design and Implementation of Real-Time Switch for Segmented Ethernets", *Lo Bello, L.; Mirabella,* 0.; Emerging Technologies and Factory Automation, 2001. Proceedings. 2001 8th IEEE International Conference on, 2001 Seiten 213-221 vol. 1, ist ein zyklisches Kommunikationsverfahren bekannt, wobei die Kommunikation in jedem Zyklus nach Prioritäten geordnet erfolgt.

Nachteilig bei diesen vorbekannten Ansätzen zur Verbesserung der Echtzeitfähigkeit des Ethernet ist, dass diese Verfahren insbesondere für industrielle Automatisierungssysteme keine hinreichende Sicherheit bieten.

Der Erfindung liegt daher die Aufgabe zugrunde, ein verbessertes echtzeitfähiges Kommunikationssystem zu schaffen, welches sich insbesondere zum Einsatz in industriellen Automatisierungssystemen eignet. Der Erfindung liegt ferner die Aufgabe zugrunde eine entsprechende Datenquelle, ein Projektierungssystem und digitale Speichermedien für ein solches echtzeitfähiges Kommunikationssystem zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß werden die Datenquellen eines Kommunikationssystems, insbesondere eines Switched Ethernet, so gesteuert, dass eine geplante, deterministische Datenübertragung von den Datenquellen an eine oder mehrere Datensenken stattfindet. Aufgrund der geplanten, deterministischen Datenübertragung wird ein echtzeitfähiges Kommunikationssystem geschaffen, da aufgrund der Planung und des Determinismus der Datenübertragung aufgrund entsprechender Steuerung der Datenquellen gewährleistet ist, dass probabilistische Zustände sicher vermieden werden und damit bestimmte Daten zu bestimmten Zeitpunkten von der oder den Datensenken empfangen werden. Die Kommunikation findet dabei über Koppelknoten (sog. "switches") statt. Damit werden die Nachteile von hub-basierten Ansätzen vermieden.

Nach einer bevorzugten Ausführungsform der Erfindung erfolgt die Planung der deterministischen Datenübertragung so, dass konkurrierende Kommunikationsanforderungen der Datenquellen vermieden werden. Dies hat den Vorteil, dass es z. B. nicht zu konkurrierenden Zugriffsversuchen der Datenquellen auf den Datenbus oder den Koppelknoten kommt und dass die Übertragung eines Rahmens nicht unterbrochen wird, wie das bei aus dem Stand bekannten Switched-Ethernetsystemen der Fall ist. Dies hat insbesondere auch den Vorteil, dass es nicht zur Ausbildung von Warteschlangen kommt.

Nach einer bevorzugten Ausführungsform der Erfindung handelt es sich bei den Datenquellen mit der Steuerung für eine geplante, deterministische Datenübertragung sowie bei der oder den Datensenken um Endknoten. Zum Beispiel können mit den Datenquellen weitere Datenquellen verbunden sein, die ihrerseits keine solche Steuerung aufweisen müssen. Durch die Endpunkte wird dabei ein echtzeitfähiges Segment des Kommunikationssystems gebildet. Ein solches Segment kann auch mehrere Koppelknoten, so genannte Hops, beinhalten.

Nach einer weiteren bevorzugten Ausführungsform der Erfindung hat jede Datenquelle an einem Endknoten einen Speicher mit Beschreibungsdaten für die geplante, deterministische Datenübertragung von der Datenquelle zu der Datensenke. Diese Beschreibungsdaten können beispielsweise durch ein Projektierungssystem erzeugt werden. Solche Projektierungssysteme für echtzeitfähige Automatisierungssysteme sind an sich bereits für den Entwurf von IRTE-Systemen bekannt, und von der Firma Siemens AG kommerziell erhältlich.

Alternativ oder zusätzlich werden solche Beschreibungsdaten zur Steuerung der Datenquellen durch eine automatische Ermittlung der Topologie des Kommunikationssystems, der Eigenschaften der beteiligten Koppelknoten und der Zeit- und Volumen-Anforderungen der Anwendungs-Entitäten ermittelt. Eine hierfür geeignete Methode ist beispielsweise das Single Service Discovery Protocol (SSDP).

Nach einer weiteren bevorzugten Ausführungsform der Erfindung sind zur Realisierung der geplanten, deterministischen Datenübertragung Synchronisationsmittel zur Synchronisation der Datenquellen untereinander vorgesehen. Eine solche Synchronisation kann beispielsweise mit Hilfe eines Tokens oder Round-Robin-Verfahrens oder auch durch aufeinander synchronisierte Zeitbasen der einzelnen Datenquellen erfolgen.

Nach einer weiteren bevorzugten Ausführungsform der Erfindung sind Kommunikationslücken bei der Planung der deterministischen Datenübertragung vorgesehen. Dies hat den Vorteil, dass unabhängig von der geplanten, deterministischen Datenübertragung in den Lücken weitere Datenübertragungen stattfinden können. Auf diese Art und Weise können mobile Netzwerkknoten hinzugefügt werden oder entfernt werden, ohne dass die Projektierung erneut erfolgen muss.

Nach einer weiteren bevorzugten Ausführungsform der Erfindung werden in vordefinierten Zeitabständen Selbstdiagnosen des Systems durchgeführt. Bei der Selbstdiagnose wird der Zugang von mobilen Knoten synchronisiert. Vorzugsweise ist der Zeitabstand für die Selbstdiagnose durch den längsten, maximalen Zyklus gegeben.

Nach einer weiteren bevorzugten Ausführungsform der Erfindung ist die Steuerung der Datenquellen für die geplante, deterministische Datenübertragung durch ein Softwaremodul in den Datenquellen realisiert. Vorzugsweise ist dieses kompatibel zum Microsoft Windows Bandbreiten-Reservierungssystem, wie es ab Windows 2000 implementiert ist, und hat die Form eines Policy-Moduls.

Von besonderem Vorteil ist bei der vorliegenden Erfindung, dass sie den Aufbau eines echtzeitfähigen Kommunikationssystems, welches für industrielle Automatisierungssysteme geeignet ist, auf der Grundlage von Switched Ethernet-Standardkomponenten ermöglicht, wobei diese nur durch ein Softwaremodul ergänzt werden müssen. Von besonderem Vorteil ist dabei ferner, dass die Standard-Switched Ethernet-Komponenten aufgrund der erfindungsgemäßen Steuerung der Datenübertragung optimal genutzt werden, da keine Ressourcen für konkurrierende Kommunikationszugriffe, Warteschlangen und dergleichen aufgewendet werden müssen.

Im Weiteren werden bevorzugte Ausführungsformen der Erfindung mit Bezugnahme auf die Zeichnungen näher erläutert. Es zeigen:
- Figur 1: ein Blockdiagramm einer Ausführungsform eines erfindungsgemäßen echtzeitfähigen Kommunikationssystems,
- Figur 2: ein Blockdiagramm eines Projektierungssystems für die Erzeugung von Beschreibungsdateien für die geplante, deterministische Datenübertragung,
- Figur 3: ein Flussdiagramm zur Darstellung der prinzipiellen Arbeitsweise einer Datenquelle des echtzeitfähigen Kommunikationssystems,
- Figur 4: ein Blockdiagramm einer weiteren bevorzugten Ausführungsform mit einem zyklischen Token-Verfahren zur Synchronisation der Datenquellen,
- Figur 5: eine grafische Darstellung der Güte eines deterministischen Kommunikationssystems auf Basis seiner Reaktionszeit,
- Figur 6: ein Blockdiagramm einer Datenquelle mit einer automatischen Ermittlung der Topologie.

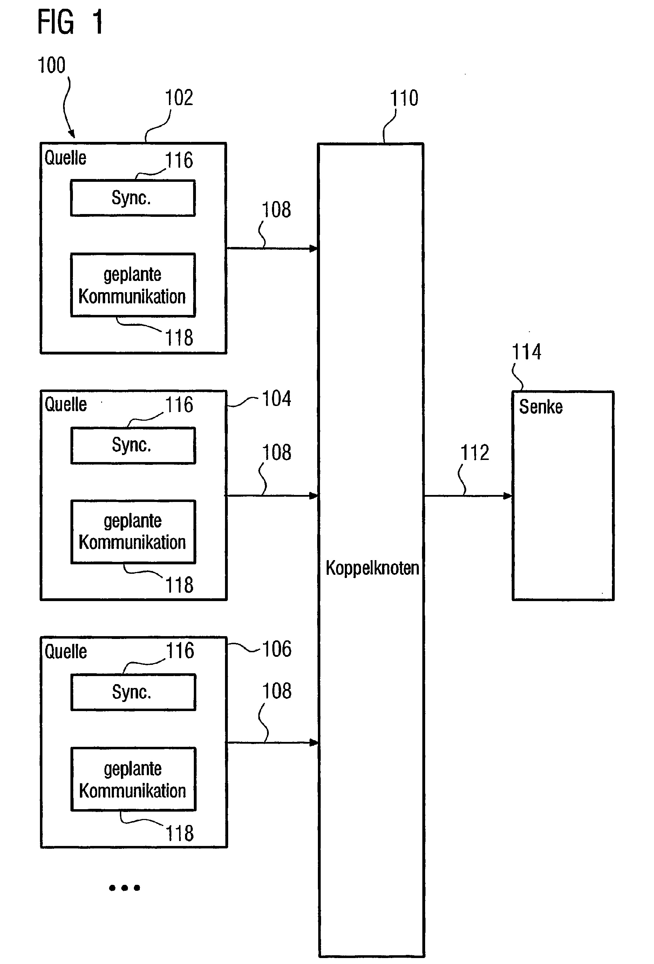

Die Figur 1 zeigt ein deterministisches Kommunikationssystem 100 mit Datenquellen 102, 104, 106, ..., die über übliche Ethernetkabel 108 mit einem Koppelknoten 110 verbunden sind. Ein solcher Koppelknoten 110 wird auch als "Switch" bezeichnet.

Der Koppelknoten 110 ist über ein Ethernetkabel 112 mit einer Datensenke.114 verbunden.

Vorzugsweise handelt es sich bei den Datenquellen 102, 104, 106, ..., den Koppelknoten 110 und der Senke 114 um Standardkomponenten, wie sie bei einem Switched Ethernet verwendet werden. Bei den Datenquellen 102, 104, 106, ..., kann es sich z. B. um speicherprogrammierbare Steuerungen (SPS), ein SCADA-System (supervisory control and data acquisition) oder um ein Feldbus-Peripherie-Gerät zu einem SCADA-System handeln. Je nach dem Systemzustand kann dabei eine Datenquelle 102, 104, 106, ... auch als Datensenke fungieren und umgekehrt.

In einer praktischen Anwendung sind ferner mehrere Koppelknoten - so genannte Hops - zwischen einer Datenquelle und einer Datensenke angeordnet. Vorzugsweise dient dabei das Kommunikationssystem 100 zur Regelung eines industriellen Automatisierungssystems insbesondere für Verpackungsmaschinen, Pressen, Kunststoff-Spritzmaschinen, Textilmaschinen, Druckmaschinen, Werkzeugmaschinen, Roboter, Holzverarbeitungsmaschinen, Glasverarbeitungsmaschinen, Keramikverarbeitungsmaschinen sowie Hebezeugen.

Die Datenquellen 102, 104, 106, ... basieren auf Standard-Ethernet-Komponenten und sind durch die zusätzlichen Softwaremodule 116 und 118 "veredelt". Das Modul 116 dient dabei zur Synchronisation der Datenquellen 102, 104, 106, ... untereinander. Hierfür kann auf verschiedene an sich bekannte Synchronisationsverfahren zurückgegriffen werden. Beispielsweise kann die Synchronisation durch ein zyklisches Token-Verfahren oder durch aufeinander synchronisierte Zeitbasen realisiert werden.

Jedes der Module 118 speichert eine Beschreibungsdatei für die geplante, deterministische Datenübertragung der betreffenden Datenquelle zu der Datensenke 114. Die Planung der Kommunikation erfolgt dabei so, dass es zu keinem Zeitpunkt zu einer Überlastung eines Teilnehmers des Kommunikationssystems 100 kommt, d. h. insbesondere nicht zu konkurrierende Kommunikationsanforderungen und Warteschlangen für einen Zugriff auf den Koppelknoten 110 oder die Datensenke 114.

Aufgrund dieser Art der Planung ist die Kommunikation auch determiniert, da das sonst übliche, auf einem Zufallsprinzip basierende Ethernet-Zugriffsverfahren aufgrund der stringenten Planung der Kommunikation vermieden wird. Aufgrund dieser Vorkonfiguration der Datenübertragungen in dem betrachteten Switched Ethernet-Segment ist die Reaktionszeit des Kommunikationssystems für eine bestimmte Datenübertragung vorherbestimmt:

Einerseits ist die maximale Switch-Delay-Zeit, d. h. die durch den Koppelknoten 110 bedingte Zeitverzögerung der Datenübertragung bekannt; diese Zeit ist für jeden Koppelknoten-Typ und die verschiedenen Arbeitsweisen eines Koppelknotens, d. h. z. B. Store-and-Forward oder cut-through, die Anzahl der Ports, Priority usw. vorgegeben. Diese Zeit entspricht der Zeit, die ein Bit eines beliebigen Ports zu einer beliebigen Zeit von In-Port zu Out-Port benötigt.

Andererseits wird die Kommunikation der Datenquellen durch die Projektierung, d. h. die Steuerung der Datenquellen für eine geplante, deterministische Datenübertragung z. B. hinsichtlich Bandbreite, Reihenfolge und Nachrichtenlänge vorgegeben. Dies wird insbesondere dadurch erreicht, dass die Projektierung des betrachteten Switch-Ethernet-Segments den gesamten Nachrichtenverkehr in diesem Segment umfasst, sodass garantiert wird, dass zu keinem Zeitpunkt ein Teilnehmer dieses Segments überlastet wird. Daraus folgt, dass sich die Reaktionszeit des Systems zwischen zwei Endknoten, also zwischen einer der Datenquellen und der Datensenke 114 durch die folgende Formel berechnen lässt:

Anzahl der Hops * maximaler Switch-Delay + Kabelverzögerung

Soll z. B. in einem Switched Ethernet-Segment die Reaktionszeit zwischen der Datenquelle 102 und der Datensenke 104 berechnet werden, und sind zwischen der Datenquelle 102 und der Datensenke 114 eine Anzahl von 10 Hops und insgesamt 1 000 Meter Kabel, so ergibt sich als Reaktionszeit 1 000 * 5 ns (Kabelverzögerung) + 10 x 120 µs (Verzögerung durch die 10 Koppelknoten bei worst case store-and-forward) + 10 x 5 µs (Koppelknoten-Durchschaltzeit) = 1,255 ms.

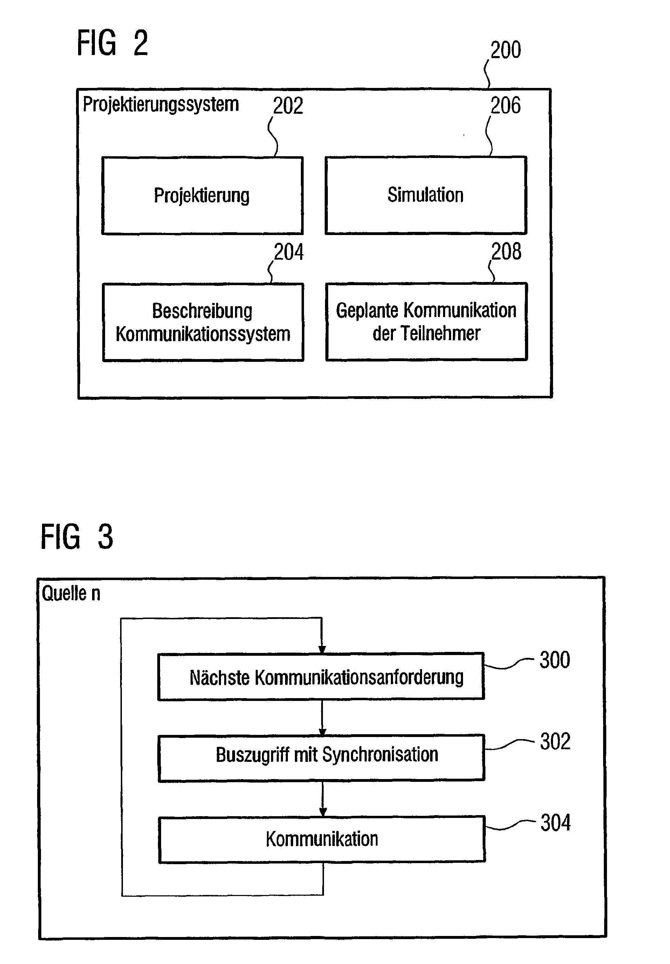

Die Figur 2 zeigt ein Blockdiagramm eines Projektierungssystems 200 wie es zur Erzeugung der Beschreibungsdateien für die Module 118 der Datenquellen 102, 104, 106, ... verwendet werden kann.

Das Projektierungssystem 200 hat ein Modul 202 zur Eingabe von Projektierungsdaten. Ferner hat das Projektierungssystem 200 eine Abbildung 204 des zuvor projektierten Kommunikationssystems. Ein Modul 206 des Projektierungssystems 200 dient zur Durchführung einer Simulation, um die Korrektheit des projektierten Kommunikationssystems zu überprüfen.

Die Projektierung erfolgt erfindungsgemäß dabei so, dass zu keinem Zeitpunkt einer der Teilnehmer des zu projektierenden Kommunikationssystems überlastet wird, sodass es nicht zu probabilistischen, d.h. nicht deterministischen, Systemzuständen kommt, wie das sonst bei Switched Ethernet-Kommunikationssystemen der Fall ist. Insbesondere wird durch diese Art und Weise der Projektierung verhindert, dass es zu konkurrierenden Zugriffen auf Systemressourcen mit der Bildung von Warteschlangen und dergleichen kommt.

Ferner verfügt das Projektierungssystem 200 über ein Modul 208 zur Erzeugung von Beschreibungsdateien für die Module 118 (vergleiche Figur 1) der Datenquellen 102, 104, 106, ... Die Erzeugung solcher Beschreibungsdateien, die spezifisch für die betreffenden Datenquellen sind, hat den Vorteil, dass nicht in jeder Datenquelle ein komplettes Abbild des Kommunikationssystems gespeichert werden muss.

Die Figur 3 veranschaulicht die prinzipielle Arbeitsweise einer Datenquelle n in einem erfindungsgemäßen Kommunikationssystem mit geplanter, deterministischer Kommunikation. In dem Schritt 300 holt die Datenquelle die nächste Kommunikationsanforderung aus ihrer Beschreibungsdatei. Daraufhin erfolgt in dem Schritt 302 ein Buszugriff, der synchronisiert zu den anderen Datenquellen erfolgt, sodass es nicht zu einem gleichzeitigen Zugriff mehrerer Datenquellen kommt. Der Buszugriff in dem Schritt 302 führt also mit Sicherheit zur Abwicklung der gewünschten Kommunikation in dem Schritt 304. Von dort aus geht die Ablaufsteuerung zurück zu dem Schritt 300. Der prinzipiell gleiche Vorgang läuft dabei zeitlich parallel in den weiteren Datenquellen des Kommunikationssystems ab. Der Synchronismus wird beispielsweise durch synchrone Zeitbasen der Datenquellen hergestellt.

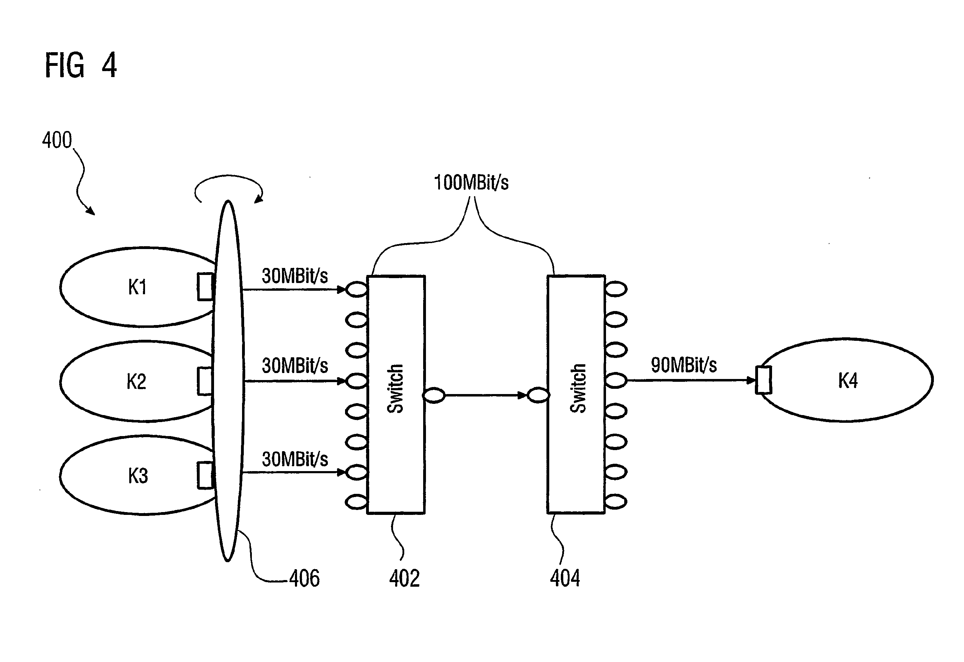

Die Figur 4 zeigt eine weitere Ausführungsform eines erfindungsgemäßen Kommunikationssystems 400. Das Kommunikationssystem 400 hat Datenquellen K1, K2, K3 und eine Datensenke K4. Die Datenquellen K1, K2 und K3 sind über Koppelknoten 402 und 404 miteinander verbindbar.

Beispielsweise hat jeder der Koppelknoten 402, 404 eine Übertragungskapazität von 100 MBit/s. Die Datenquellen K1, K2 und K3 sind dagegen mit einer mittleren maximalen Datenrate von 30 MBit/s mit dem Koppelknoten 402 verbunden. Die Datenquellen K1, K2 und K3 sind untereinander durch ein zyklisches Token-Verfahren 406 in Senderichtung synchronisiert, damit es nicht zu konkurrierenden Zugriffen auf den Koppelknoten 402 bzw. den Koppelknoten 404 kommt. Dabei ist es ausreichend, dass die unmittelbaren Endknoten, d. h. die Datenquellen K1, K2 und K3 in Senderichtung synchronisiert werden; für, den Datenquellen K1, K2 und K3 gegebenenfalls vorgelagerte Knoten ist eine solche Synchronisierung nicht erforderlich.

Das Token-Verfahren - oder auch jedes andere Synchronisationsverfahren - definiert die maximale Verzögerungszeit des Koppelknotens in eine Richtung.

Durch die projektierte Sende- und Empfangsvorschrift in den einzelnen Datenquellen K1, K2 und K3 ist also gewährleistet, dass die Kommunikation nicht nur geplant, sondern auch deterministisch abläuft, da z. B. aufgrund der Projektierung sichergestellt ist, dass zu keinem Zeitpunkt ein Teilnehmer überlastet wird, und es so nicht zu einem nicht vorgeplanten Zustand kommen kann. Wenn eine der Datenquellen K1, K2 oder K3 zu einem bestimmten Zeitpunkt eine Kommunikationsverbindung über die Koppelknoten 402 und 404 zu dem Koppelknoten 404 herstellt, steht für diese Zeit des Zugriffs garantiert eine Datenrate von 90 MBit/s zur Verfügung.

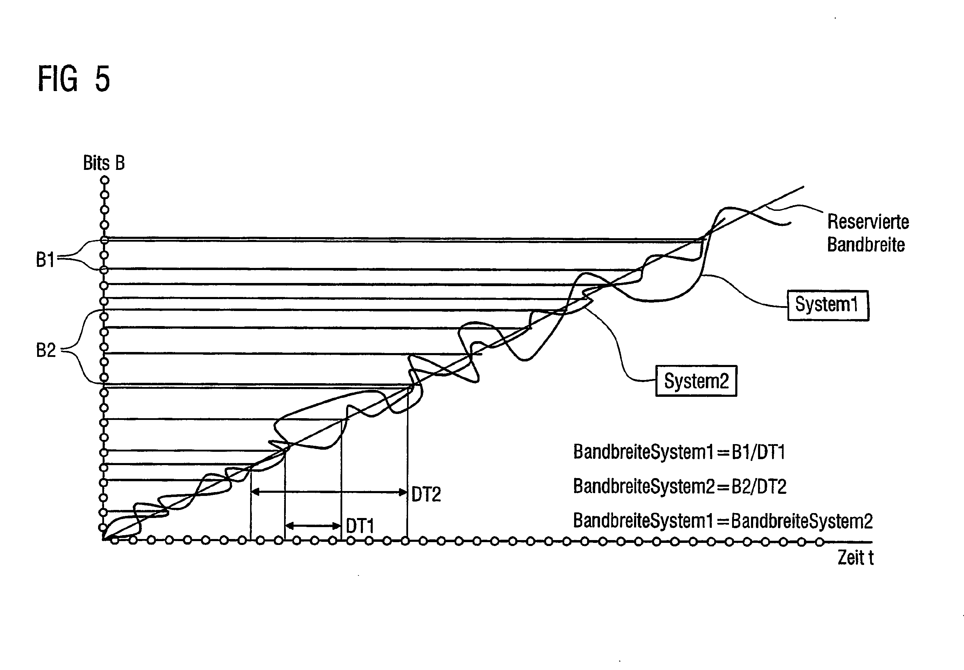

Die Figur 5 zeigt eine grafische Darstellung der Güte, d. h. der Bandbreite, eines Ethernet-Kommunikationssystems, wobei Systeme 1 und 2 miteinander verglichen werden.

Beispielsweise produziert das System 1 im Zyklus DT1 und das System 2 produziert im Zyklus DT2. Aus der folgenden Ableitung ergibt sich, dass das System 1 drei Mal schneller produziert als das System 2 und zwar bezogen auf das Datenvolumen B1, da die Kommunikation in dem System 1 eher dem linearen Idealzustand ("reservierte Bandbreite"), entspricht:
Das maximale Zeitintervall DT der garantierten Bandbreite (Bits/DT) zwischen zwei beliebigen Knoten K1 und K2 eines deterministischen Switched-Ethernet Kommunikationssystem definiert seine Reaktionszeit. Aus der grafischen Darstellung der Fig.5 lässt sich ablesen:
   1. Im Zeitraum T = a* (DT1 + DT2) hat Kommunikationssystem 1 B = a* (B1 + B2) Bits übertragen.
   2. Im Zeitraum T = a* (DT1 + DT2) hat Kommunikationssystem 2 B = a* (B1 + B2) Bits übertragen.
   3. DT2 = 3*DT1.
   4. Zum Zeitpunkt T = a* (DT1 + DT2) in der Zukunft: Kommunikationssystem 1 kann garantiert B1 Bits in DT1 Zeit transferieren, während Kommunikationssystem 2 für B1 Bits (worst case) 3*DT1 Zeit benötigt.
      Daraus folgt: Die Reaktionszeit von Kommunikationssystem 1 ist drei Mal schneller als die von Kommunikationssystem 2.
   5. Das Kommunikationssystem 1 (Kommunikationssystem 2) kann zyklisch garantiert B1 (B2) Bits im Zyklus DT1 (DT2) transferieren.

Aus 4 und 5 folgt: Der (Produktions-)Zyklus eines Kommunikationssystems wird durch seine Reaktionszeit definiert.

Daraus folgt ferner, dass ein zyklisches Produktionssystem P1 (z. B. eine Paketiermaschine), welches Kommunikationssystem 1 als Medium zur Synchronisation seiner Peripherie einsetzt (z. B. Schreiben der Ausgänge und Lesen der Eingänge), drei Mal schneller produzieren kann, als wenn es Kommunikationssystem 2 einsetzen würde.

Eine Kommunikationsanforderung für eine geplante, deterministische Kommunikation beinhaltet daher vorzugsweise eine genaue Angabe der zu übertragenden Bits und der, für die Übertragung zur Verfügung stehenden Zeit, anstelle einer globalen Angabe der mittleren Datenrate, wie sonst im Stand der Technik üblich.

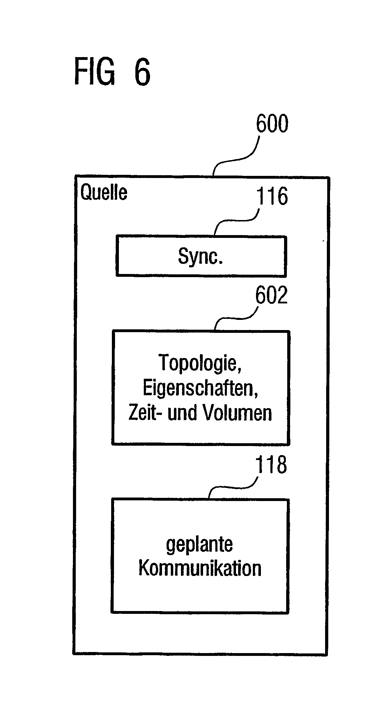

Die Figur 6 zeigt eine weitere Ausführungsform einer Datenquelle 600. Wie auch die Datenquellen 102, 104, 106, ... des Kommunikationssystems 100 der Figur 1 verfügt die Datenquelle 600 über Module 116 und 118. Im Unterschied zu dem Kommunikationssystem 100 der Figur 1 wird die Beschreibungsdatei für das Modul 118 jedoch nicht oder nicht vollständig von einem externen Projektierungssystem geliefert, sondern durch das Modul 602 der Datenquelle 600.

Bei der Initialisierung des Kommunikationssystems fragt das Modul 602 die Netzwerktopologie ab und ermittelt ferner die Eigenschaften von Systemteilnehmern, insbesondere von Switch-Delays der Koppelknoten und dergleichen. Die entsprechenden Daten können in den Teilnehmern selbst in Form von selbstbeschreibenden Datenblättern im Format XML vorliegen.

Ferner fragt das Modul 602 auch die Zeit- und Volumenanforderungen von Anwendungs-Entitäten der relevanten Teilnehmer des Kommunikationssystems ab. Auf der Grundlage dieser Datenbasis und/oder einer ergänzenden Datenbasis, die von dem Projektierungssystem zur Verfügung gestellt worden ist, erfolgt dann die Erzeugung der endgültigen Beschreibungsdatei für die geplante Kommunikation, welche als Grundlage für die Steuerung der Datenübertragung durch das Modul 118 dient.

## Patentansprüche

1. Deterministisches Kommunikationssystem mit Datenquellen (102, 104, 106, ...; K1, K2, K3; 600), die über zumindest einen switched Ethernet Koppelknoten (110; 402, 404) mit einer Datensenke (114; K4) verbindbar sind, mit Mitteln (118) zur Steuerung der Datenquellen für eine geplante, deterministische Kommunikation von den Datenquellen zu der Datensenke, **dadurch gekennzeichnet, dass** zumindest eine der Datenquellen (102, 104, 106, ...; K1, K2, K3; 600) Mittel (602) zur Ermittlung einer Topologie des Kommunikationssystems, von Eigenschaften von Teilnehmern des Kommunikationssystems und von Zeit- und Volumenanforderungen von Anwendungsentitäten der Teilnehmer des Kommunikationssystems zur darauf basierenden Erzeugung von Beschreibungsdaten der geplanten, deterministischen Kommunikation aufweist.

2. Deterministisches Kommunikationssystem nach Anspruch 1, wobei die Mittel (118) zur Steuerung der Datenquellen (102, 104, 106, ...; K1, K2, K3; 600) so ausgebildet sind, dass konkurrierende Kommunikationsanforderungen der Datenquellen (102, 104, 106, ...; K1, K2, K3; 600) vermieden werden.

3. Deterministisches Kommunikationssystem nach Anspruch 1 oder 2, wobei die Mittel (118) zur Steuerung der Datenquellen (102, 104, 106, ...; K1, K2, K3; 600) so ausgebildet sind, dass die Ausbildung von Warteschlangen von Kommunikationsanforderungen der Datenquellen (102, 104, 106, ...; K1, K2, K3; 600) vermieden werden.

4. Deterministisches Kommunikationssystem nach einem der Ansprüche 1, 2 oder 3, wobei es sich bei den Datenquellen (102, 104, 106, ...; K1, K2, K3; 600) und der Datensenke (114; K4) um Endknoten handelt.

5. Deterministisches Kommunikationssystem nach einem der vorhergehenden Ansprüche, wobei mehrere Koppelknoten (110; 402, 404) zwischen den Datenquellen (102, 104, 106, ...; K1, K2, K3; 600) und der Datensenke (114; K4) vorgesehen sind.

6. Deterministisches Kommunikationssystem nach einem der vorhergehenden Ansprüche, wobei jede der Datenquellen (102, 104, 106, ...; K1, K2, K3; 600) einen Speicher (118) mit Beschreibungsdaten zur Beschreibung der geplanten, deterministischen Kommunikation von der betreffenden Datenquelle (102, 104, 106, ...; K1, K2, K3; 600) zu der Datensenke (114; K4) aufweist.

7. Deterministisches Kommunikationssystem nach einem der vorhergehenden Ansprüche, mit einem Projektierungssystem (200) zur Erzeugung von Beschreibungsdaten der geplanten, deterministischen Kommunikation.

8. Deterministisches Kommunikationssystem nach einem der vorhergehenden Ansprüche, wobei die Mittel zur Steuerung (118) der Datenquellen so ausgebildet sind, dass Lücken in der geplanten, deterministischen Kommunikation vorgesehen sind, wobei die Lücken für zusätzliche Datenübertragungen außerhalb der geplanten, deterministischen Kommunikation verwendet werden können.

9. Deterministisches Kommunikationssystem nach einem der vorhergehenden Ansprüche mit Synchronisationsmitteln (116) für die geplante, deterministische Kommunikation von den Datenquellen (102, 104, 106, ...; K1, K2, K3; 600).

10. Deterministisches Kommunikationssystem nach Anspruch 9, wobei die Synchronisationsmittel (116) basierend auf einem zyklischen Token-Verfahren ausgebildet sind.

11. Deterministisches Kommunikationssystem nach Anspruch 9, wobei die Synchronisationsmittel (116) auf einer gemeinsamen, synchronen Zeitbasis der Datenquellen basieren.

12. Deterministisches Kommunikationssystem nach einem der vorhergehenden Ansprüche, wobei es sich bei den Datenquellen (102, 104, 106, ...; K1, K2, K3; 600), dem Koppelknoten (110; 402, 404) und der Datensenke (114; K4) um Komponenten eines Switched-Ethernet handelt und die Mittel (118) zur Steuerung der Datenquellen als ein Computerprogramm ausgebildet sind.

13. Digitales Speichermedium mit Programmmitteln für ein deterministisches Kommunikationssystem (100; 400) mit Datenquellen (102, 104, 106, ...; K1, K2, K3; 600), die über zumindest einen switched Ethernet Koppelknoten (110; 402, 404) mit einer Datensenke (114; K4) verbindbar sind, wobei die Programmmittel zur Steuerung der Datenquellen (102, 104, 106, ...; K1, K2, K3; 600) für eine geplante, deterministische Datenübertragung von den Datenquellen (102, 104, 106, ...; K1, K2, K3; 600) zu der Datensenke (114; K4) ausgebildet sind, **dadurch gekennzeichnet, dass** das Speichermedium Programmmittel zur Ermittlung durch zumindest eine der Datenquellen (102, 104, 106 ..., K1, K2, K3; 600) einer Topologie des Kommunikationssystems, von Eigenschaften von Teilnehmern des Kommunikationssystems und von Zeit- und Volumenanforderungen von Anwendungsentitäten der Teilnehmer des Kommunikationssystems zur darauf basierenden Erzeugung von Beschreibungsdaten der geplanten, deterministischen Kommunikation aufweist.

14. Digitales Speichermedium nach Anspruch 13, wobei die Programmmittel zur Steuerung der Datenquellen (102, 104, 106, ...; K1, K2, K3; 600) für die geplante, deterministische Kommunikation so ausgebildet sind, dass konkurrierende Kommunikationsanforderungen der Datenquellen (102, 104, 106, ...; K1, K2, K3; 600) vermieden sind.

15. Digitales Speichermedium nach Anspruch 13 oder 14, wobei die Programmmittel zur Steuerung der Datenquellen (102, 104, 106,...; K1, K2, K3; 600) für eine geplante, deterministische Kommunikation so ausgebildet sind, dass es nicht zur Ausbildung von Warteschlangen aufgrund der Kommunikationsanforderungen der Datenquellen (102, 104, 106,...; K1, K2, K3; 600) kommt.

16. Digitales Speichermedium nach einem der Ansprüche 13 bis 15, wobei auf dem digitalen Speichermedium die Beschreibungsdaten der geplanten, deterministischen Kommunikation von zumindest einer der Datenquellen (102, 104, 106,...; K1, K2, K3; 600) zu der Datensenke (114; K4) gespeichert sind.

17. Datenquelle für ein deterministisches Kommunikationssystem (100; 400), wobei das deterministische Kommunikationssystem (100; 400) mehrere Datenquellen (102, 104, 106,...; K1, K2, K3; 600) aufweist, die über zumindest einen switched Ethernet Koppelknoten (110; 402, 404) mit einer Datensenke (114; K4) verbindbar sind, wobei die Datenquelle (102, 104, 106,...; K1, K2, K3; 600) Mittel (118) zur Steuerung der Datenquelle für eine geplante, deterministische Kommunikation von der Datenquelle (102, 104, 106,...; K1, K2, K3; 600) zu der Datensenke (114; K4) aufweist, **dadurch gekennzeichnet, dass** die Datenquelle Mittel (602) zur Ermittlung einer Topologie des Kommunikationssystems, von Eigenschaften von Teilnehmern des Kommunikationssystems und von Zeit- und Volumenanforderungen von Anwendungsentitäten der Teilnehmer des Kommunikationssystems zur darauf basierenden Erzeugung von Beschreibungsdaten der geplanten, deterministischen Kommunikation aufweist.

18. Datenquelle nach Anspruch 17, wobei die Mittel (118) zur Steuerung der Datenquelle (102, 104, 106,...; K1, K2, K3; 600) für eine geplante, deterministische Kommunikation so ausgebildet sind, dass konkurrierende Kommunikationsanforderungen der Datenquellen vermieden werden.

19. Datenquelle nach Anspruch 17 oder 18, wobei die Mittel (118) zur Steuerung der Datenquelle für eine geplante, deterministische Kommunikation so ausgebildet sind, dass die Ausbildung von Warteschlangen aufgrund von Kommunikationsanforderungen der Datenquellen vermieden sind.

20. Datenquelle nach Anspruch 17, 18 oder 19 mit Synchronisationsmitteln (116) zur Synchronisation der geplanten, deterministischen Kommunikation mit den weiteren Datenquellen (102, 104, 106,...; K1, K2, K3; 600) des deterministischen Kommunikationssystems (100; 400).

21. Verfahren für ein deterministisches Kommunikationssystem mit Datenquellen (102, 104, 106,...; K1, K2, K3; 600), die über zumindest einen Koppelknoten (110; 402, 404) mit einer Datensenke (114; K4) verbindbar sind, wobei es sich bei den Datenquellen, dem zumindest einen Koppelknoten und der Datensenke um switched Ethernet Komponenten handelt, wobei die Datenquellen für eine geplante, deterministische Kommunikation von den Datenquellen zu der Datensenke gesteuert werden **gekennzeichnet durch** folgende weitere Schritte: Ermittlung einer Topologie des Kommunikationssystems, von Eigenschaften von Teilnehmern des Kommunikationssystems und von Zeit- und Volumenanforderungen von Anwendungsentitäten der Teilnehmer des Kommunikationssystems und eine darauf basierende Erzeugung von Beschreibungsdaten der geplanten, deterministischen Kommunikation **durch** zumindest eine der Datenquellen.

22. Verfahren nach Anspruch 21, wobei die Steuerung der Datenquellen so erfolgt, dass konkurrierende Kommunikationsanforderungen der Datenquellen (102, 104, 106,...; K1, K2, K3; 600) vermieden werden.

23. Verfahren nach Anspruch 21 oder 22, wobei die Steuerung der Datenquellen so erfolgt, dass die Ausbildung von Warteschlangen von Kommunikationsanforderungen der Datenquellen (102, 104, 106,...; K1, K2, K3; 600) vermieden werden.

24. Verfahren nach Anspruch 21, 22 oder 23, wobei eine Kommunikationsanforderung einer der Datenquellen (102, 104, 106,...; K1, K2, K3; 600) eine Angabe hinsichtlich der insgesamt zu übertragenden Informationsmenge und der für die Übertragung der Informationsmenge insgesamt zur Verfügung stehenden Zeit beinhaltet.

25. Verfahren nach einem der vorhergehenden Ansprüche 21 bis 24, mit einer Synchronisation für die geplante, deterministische Kommunikation von den Datenquellen (102, 104, 106, ... ; K1, K2, K3; 600).

26. Verfahren nach Anspruch 25, wobei die Synchronisation basierend auf einem zyklischen Token-Verfahren erfolgt.

## Claims

1. Deterministic communication system with data sources (102, 104, 106,...; K1, K2, K3; 600) which can be connected via at least one switched Ethernet*switch (110; 402, 404) to a data sink (114; K4), with means (118) for controlling the data sources for a planned, deterministic communication from the data sources to the data sink, **characterised in that** at least one of the data sources (102, 104, 106,...; K1, K2, K3; 600) features means (602) for determining the topology of the communications system, characteristics of subscribers of the communication system and time and volume requirements of application entities of the subscriber of the communication system for generation of description data of the planned, deterministic communication on this basis.

2. Deterministic communication system in accordance with claim 1, where the means (118) for control of the data sources (102, 104, 106,...; K1, K2, K3; 600) are embodied such that competing communication requests of the data sources (102, 104, 106,...; K1, K2, K3; 600) are avoided.

3. Deterministic communication system in accordance with claim 1 or 2, with the means (118) for controlling the data sources (102, 104, 106,...; K1, K2, K3; 600) being embodied such that the formation of queues from communication requests of the data sources (102, 104, 106,...; K1, K2, K3; 600) are avoided.

4. Deterministic communication system in accordance with one of the claims 1, 2 or 3, with the data sources (102, 104, 106,...; K1, K2, K3; 600) and the data sink (114; K4) being end nodes.

5. Deterministic communication system in accordance with one of the previous claims, with a number of switches (110; 402, 404) being provided between the data sources (102, 104, 106,...; K1, K2, K3; 600) and the data sink (114; K4) .

6. Deterministic communication system in accordance with one of the previous claims, with each of the data sources (102, 104, 106,...; K1, K2, K3; 600) featuring a memory (118) with description data for description of the planned, deterministic communication of the relevant data source (102, 104, 106,...; K1, K2, K3; 600) to the data sink (114; K4).

7. Deterministic communication system in accordance with one of the previous claims, with a project-planning system (200) for generating description data of the planned, deterministic communication.

8. Deterministic communication system in accordance with one of the previous claims, with the means for control (118) of the data sources being embodied so that gaps are provided in the planned, deterministic communication, with the gaps being able to be used for additional data transmission outside the planned deterministic communication.

9. Deterministic communication system in accordance with one of the previous claims, with synchronization means (116) for the planned, deterministic communication of the data sources (102, 104, 106,...; K1, K2, K3; 600).

10. Deterministic communication system in accordance with claim 9, where the synchronization means (116) are embodied based on a cyclic token method.

11. Deterministic communication system in accordance with claim 9, where the synchronization means (116) are based on a common, synchronous time base of the data sources.

12. Deterministic communication system in accordance with one of the previous claims, with the data sources (102, 104, 106,...; K1, K2, K3; 600), the switch (110; 402, 404) and the data sink (114; K4) being components of a Switched-Ethernet and the means (118) for control of the data sources being embodied as a computer program product.

13. Digital memory medium with program means for a deterministic communication system (100; 400) with data sources (102, 104, 106,...; K1, K2, K3; 600), which are connected via at least one Switched Ethernet switch (110; 402, 404) to a data sink (114; K4), with the program means being embodied for control of the data sources (102, 104, 106,...; K1, K2, K3; 600) for a planned, deterministic data transmission from the data sources (102, 104, 106,...; K1, K2, K3; 600) to the data sink (114; K4), **characterised in that** the memory medium features programming means for determination by at least one of the data sources (102, 104, 106,...; K1, K2, K3; 600) of the topology of the communications system, characteristics of subscribers of the communication system and time and volume requirements of application entities of the subscriber of the communication system for generation of description data of the planned, deterministic communication on this basis.

14. Digital memory medium in accordance with claim 13, with the program means for control of the data sources (102, 104, 106,...; K1, K2, K3; 600) for the planned, deterministic communication being embodied so that competing communication requests of the data sources (102, 104, 106,...; K1, K2, K3; 600) are avoided.

15. Digital memory medium in accordance with claim 13 or 14, where the program means for control of the data sources (102, 104, 106,...; K1, K2, K3; 600) for a planned, deterministic communication are embodied so that the formation of queues as a result of communication requests from the data sources (102, 104, 106,...; K1, K2, K3; 600) do not arise.

16. Digital memory medium in accordance with one of the claims 13 to 15, with description data of the planned, deterministic communication from at least one of the data sources (102, 104, 106,...; K1, K2, K3; 600) to the data sink (114; K4) being stored on the digital memory medium.

17. Data source for a deterministic communication system (100; 400), with the deterministic communication system (100; 400) featuring a number of data sources (102, 104, 106,...; K1, K2, K3; 600) which are connected via at least one Switched Ethernet switch (110; 402, 404) to a data sink (114; K4), with the data source (102, 104, 106,...; K1, K2, K3; 600) featuring means (118) to control the data source or a planned, deterministic communication from the data source (102, 104, 106,...; K1, K2, K3; 600) to the data sink (114; K4), **characterised in that** the data source features means (602) for determining a topology of the communications system, characteristics of subscribers of the communication system and line and volume requirements of application entities of the subscriber of the communication system for generation of description data of the planned, deterministic communication on this basis.

18. Data source in accordance with claim 17, with the means (118) for control of the data source (102, 104, 106,...; K1, K2, K3; 600) for a planned, deterministic communication being embodied so that competing communication requests of the data sources are avoided.

19. Data source in accordance with claim 17 or 18, where the means (118) for control of the data source for a planned, deterministic communication are embodied so that the formation of queues as a result of communication requests from the data sources is avoided.

20. Data source in accordance with claim 17, 18 or 19, with synchronization means (116) for synchronization of the planned, deterministic communication with the further data sources (102, 104, 106,...; K1, K2, K3; 600) of the deterministic communication system (100; 400).

21. Method for a deterministic communication system (100; 400) with data sources (102, 104, 106,...; K1, K2, K3; 600) which are connected via at least of one Switched Ethernet switch (110; 402, 404) to a data sink (114; K4), with the data sources, the at least one switch and the data sink being Switched Ethernet components, with the data sources being controlled for a planned, deterministic communication from the data sources to the data sink, **characterised by** the following further steps: Determining a topology of the communications system, characteristics of subscribers of the communication system and time and volume requirements of application entities of the subscriber of the communication system for generation of description data of the planned, deterministic communication on this basis by at least one of the data sources.

22. Method in accordance with claim 21, where the data sources are controlled so that competing communication requests from the data sources (102, 104, 106,...; K1, K2, K3; 600) are avoided.

23. Method in accordance with claim 21 or 22, with the data sources being controlled so that the formation of queues of communication requests from the data sources (102, 104, 106,...; K1, K2, K3; 600) is avoided.

24. Method in accordance with claim 21, 22 or 23, with a communication request from one of the data sources (102, 104, 106,...; K1, K2, K3; 600) containing information as regards the overall volume of information to be transmitted and the overall time available for the transmission of the volume of information.

25. Method in accordance with one of the previous claims 21 to 24, with synchronization for the planned, deterministic communication of the data sources (102, 104, 106,...; K1, K2, K3; 600).

26. Method in accordance with claim 25, where the synchronization is undertaken based on a cyclic token method.

## Revendications

1. Système de communication déterministe ayant des sources de données (102, 104, 106, ... ; K1, K2, K3 ; 600), qui peuvent être reliées à un collecteur de données (114 ; K4) par l'intermédiaire d'au moins un noeud de connexion Ethernet commuté (110 ; 402, 404), ayant des moyens (118) pour la commande des sources de données pour une communication déterministe planifiée des sources de données au collecteur de données, **caractérisé par le fait qu'**au moins l'une des sources de données (102, 104, 106, ... ; K1, K2, K3 ; 600) comporte des moyens (602) pour la détermination d'une topologie du système de communication, de propriétés d'utilisateurs du système de communication et de demandes de temps et de volume par des entités utilisatrices des utilisateurs du système de communication en vue de produire sur la base de ces informations des données de description de la communication déterministe planifiée.

2. Système de communication déterministe selon la revendication 1, dans lequel les moyens (118) pour la commande des sources de données (102, 104, 106, ... ; K1, K2, K3 ; 600) sont conçus de telle sorte que des demandes de communication concurrentes des sources de données (102, 104, 106, ... ; K1, K2, K3 ; 600) sont évitées.

3. Système de communication déterministe selon la revendication 1 ou 2, dans lequel les moyens (118) pour la commande des sources de données (102, 104, 106, ... ; K1, K2, K3 ; 600) sont conçus de telle sorte que la formation de files d'attente de demandes de communication des sources de données (102, 104, 106, ... ; K1, K2, K3 ; 600) est évitée.

4. Système de communication déterministe selon l'une des revendications 1, 2 ou 3, dans lequel les sources de données (102, 104, 106, ... ; K1, K2, K3 ; 600) et le collecteur de données (114 ; K4) sont des noeuds terminaux.

5. Système de communication déterministe selon l'une des revendications précédentes, dans lequel plusieurs noeuds de connexion (110 ; 402, 404) sont prévus entre les sources de données (102, 104, 106, ... ; K1, K2, K3 ; 600) et le collecteur de données (114 ; K4).

6. Système de communication déterministe selon l'une des revendications précédentes, dans lequel chacune des sources de données (102, 104, 106, ... ; K1, K2, K3 ; 600) comporte une mémoire (118) avec des données de description pour la description de la communication déterministe planifiée de la source de données considérée (102, 104, 106, ... ; K1, K2, K3 ; 600) au collecteur de données (114 ; K4).

7. Système de communication déterministe selon l'une des revendications précédentes, avec un système de développement (200) pour la production de données de description de la communication déterministe planifiée.

8. Système de communication déterministe selon l'une des revendications précédentes, dans lequel les moyens pour la commande (118) des sources de données sont conçus de telle sorte que des vides sont prévus dans la communication déterministe planifiée, les vides pouvant être utilisés pour des transmissions de données supplémentaires en dehors de la communication déterministe planifiée.

9. Système de communication déterministe selon l'une des revendications précédentes, avec des moyens de synchronisation (116) pour la communication déterministe planifiée à partir des sources de données (102, 104, 106, ... ; K1, K2, K3 ; 600).

10. Système de communication déterministe selon la revendication 9, dans lequel les moyens de synchronisation (116) sont conçus sur la base d'un procédé à jeton cyclique.

11. Système de communication déterministe selon la revendication 9, dans lequel les moyens de synchronisation (116) sont basés sur une base de temps synchrone commune des sources de données.

12. Système de communication déterministe selon l'une des revendications précédentes, dans lequel les sources de données (102, 104, 106, ... ; K1, K2, K3 ; 600), le noeud de connexion (110 ; 402, 404) et le collecteur de données (114 ; K4) sont des composants d'un Ethernet commuté et les moyens (118) pour la commande des sources de données sont conçus comme un programme informatique.

13. Support de mémoire numérique ayant des moyens formant programmes pour un système de communication déterministe (100 ; 400) comportant des sources de données (102, 104, 106, ; K1, K2, K3 ; 600), qui peuvent être reliées à un collecteur de données (114 ; K4) par l'intermédiaire d'au moins un noeud de connexion Ethernet commuté (110 ; 402, 404), les moyens formant programmes étant conçus pour la commande des sources de données (102, 104, 106, ... ; K1, K2, K3 ; 600) pour une transmission de données déterministe planifiée des sources de données (102, 104, 106, ... ; K1, K2, K3 ; 600) au collecteur de données (114 ; K4), **caractérisé par le fait que** le support de mémoire comporte des moyens formant programmes pour la détermination, par au moins l'une des sources de données (102, 104, 106, ... ; K1, K2, K3 ; 600), d'une topologie du système de communication, de propriétés d'utilisateurs du système de communication et de demandes de temps et de volume par des entités utilisatrices des utilisateurs du système de communication en vue de produire sur la base de ces informations des données de description de la communication déterministe planifiée.

14. Support de mémoire numérique selon la revendication 13, dans lequel les moyens formant programmes pour la commande des sources de données (102, 104, 106, ... ; K1, K2, K3 ; 600) pour la communication déterministe planifiée sont conçus de telle sorte que des demandes de communication concurrentes des sources de données (102, 104, 106, ... ; K1, K2, K3 ; 600) sont évitées.

15. Support de mémoire numérique selon la revendication 13 ou 14, dans lequel les moyens formant programmes pour la commande des sources de données (102, 104, 106, ... ; K1, K2, K3 ; 600) pour une communication déterministe planifiée sont conçus de telle sorte qu'il ne se produit pas de formation de files d'attente en raison des demandes de communication des sources de données (102, 104, 106, ... ; K1, K2, K3 ; 600).

16. Support de mémoire numérique selon l'une des revendications 13 à 15, dans lequel les données de description de la communication déterministe planifiée d'au moins l'une des sources de données (102, 104, 106, ... ; K1, K2, K3 ; 600) au collecteur de données (114 ; K4) sont mémorisées sur le support de mémoire numérique.

17. Source de données pour un système de communication déterministe (100 ; 400), le système de communication déterministe (100 ; 400) comportant plusieurs sources de données (102, 104, 106, ... ; K1, K2, K3 ; 600) qui peuvent être reliées à un collecteur de données (114 ; K4) par l'intermédiaire d'au moins un noeud de connexion Ethernet commuté (110 ; 402, 404), la source de données (102, 104, 106, ... ; K1, K2, K3; 600) comportant des moyens (118) pour la commande de la source de données pour une communication déterministe planifiée de la source de données (102, 104, 106, ... ; K1, K2, K3 ; 600) au collecteur de données (114 ; K4), **caractérisée par le fait que** la source de données comporte des moyens (602) pour la détermination d'une topologie du système de communication, de propriétés d'utilisateurs du système de communication et de demandes de temps et de volume par des entités utilisatrices des utilisateurs du système de communication en vue de produire sur la base de ces informations des données de description de la communication déterministe planifiée.

18. Source de données selon la revendication 17, dans laquelle les moyens (118) pour la commande de la source de données (102, 104, 106, ... ; K1, K2, K3; 600) pour une communication déterministe planifiée sont conçus de telle sorte que des demandes de communication concurrentes des sources de données sont évitées.

19. Source de données selon la revendication 17 ou 18, dans lequel les moyens (118) pour la commande de la source de données pour une communication déterministe planifiée sont conçus de telle sorte que la formation de files d'attente en raison de demandes de communication des sources de données est évitée.

20. Source de données selon la revendication 17, 18 ou 19, avec des moyens de synchronisation (116) pour la synchronisation de la communication déterministe planifiée avec les autres sources de données (102, 104, 106, ... ; K1, K2, K3 ; 600) du système de communication déterministe (100 ; 400).

21. Procédé pour un système de communication déterministe comportant des sources de données (102, 104, 106, ... ; K1, K2, K3 ; 600) qui peuvent être reliées à un collecteur de données (114 ; K4) par l'intermédiaire d'au moins un noeud de connexion (110 ; 402, 404), les sources de données, le ou les noeuds de connexion et le collecteur de données étant des composants d'un Ethernet commuté et les sources de données étant commandées pour une communication déterministe planifiée des sources de données au collecteur de données, **caractérisé par** les autres étapes suivantes : détermination d'une topologie du système de communication, de propriétés d'utilisateurs du système de communication et de demandes de temps et de volume par des entités utilisatrices des utilisateurs du système de communication et production, sur la base de ces informations, de données de description de la communication déterministe planifiée par au moins l'une des sources de données.

22. Procédé selon la revendication 21, dans lequel la commande des sources de données s'effectue de telle sorte que des demandes de communication concurrentes des sources de données (102, 104, 106, ... ; K1, K2, K3 ; 600) sont évitées.

23. Procédé selon la revendication 21 ou 22, dans lequel la commande des sources de données s'effectue de telle sorte que la formation de files d'attente de demandes de communication des sources de données (102, 104, 106, ... ; K1, K2, K3 ; 600) est évitée.

24. Procédé selon la revendication 21, 22 ou 23, dans lequel une demande de communication de l'une des sources de données (102, 104, 106, ... ; K1, K2, K3 ; 600) contient une indication sur l'ensemble d'informations à transmettre au total et sur le temps globalement disponible pour la transmission de l'ensemble d'informations.

25. Procédé selon l'une des revendications précédentes 21 à 24, avec une synchronisation pour la communication déterministe planifiée à partir des sources de données (102, 104, 106, ... ; K1, K2, K3 ; 600).

26. Procédé selon la revendication 25, dans lequel la synchronisation s'effectue sur la base d'un procédé à jeton cyclique.
